# EUROPEAN PATENT APPLICATION

(11) **EP 2 597 564 A2**
(43) Date of publication of application: **29.05.2013**
(21) Application number: 12193523.3
(22) Date of filing: 21.11.2012
(51) Int. Cl.: G06F 3/12

(54) **Printing method using pull printing technique and image forming apparatus using the same**

(30) Priority: 25.11.2011 KR 20110124389
(71) Applicant: Samsung Electronics Co., Ltd., Suwon-si, Gyeonggi-do, 443-742 (KR)
(72) Inventor: Oh, Seung-hee, Suwon-si (KR); Oh, Byung-woon, Suwon-si (KR)
(74) Representative: Waddington, Richard

(57) **Abstract**

A printing method using a pull printing technique and an image forming apparatus using the same obtains remaining printing data not stored in the image forming apparatus from a server for a print job. The image forming apparatus requests from the server a portion of the printing data necessary for the print job requested by a user based on the printing data already stored in the image forming apparatus. Time delay or a storage shortage problem which may occur for the same print job may be solved.

## Description

### CROSS-REFERENCE TO RELATED APPLICATIONS

This application claims the benefit of Korean Patent Application No. 10-2011-0124389, filed on November 25th, 2011, in the Korean Intellectual Property Office, the disclosure of which is incorporated herein in its entirety by reference.

### BACKGROUND

### 1. Field

The disclosure herein relates to a method of printing data by using a pull printing technique and an image forming apparatus using the same. More particularly, disclosed herein is a pull-printing type printing method and an image forming apparatus using the same, which requests a server to transmit only remaining printing data that has not been stored in the image forming apparatus when a portion of printing data necessary for a print job requested by a user is stored in the image forming apparatus.

### 2. Description of the Related Art

Along with the development of communications and information technology (IT), ultrahigh-speed internet networks have been developed, and thus devices for storing data are widely available. Accordingly, users may have access to a physically separated external storage space, for example, a server storing data, via the Internet, and may use data received from the server.

In the case of an image forming apparatus, such as a printer, when a user enters a print command via a personal computer (PC), a push-printing type printing method is used to print printing data transmitted from the PC directly to the image forming apparatus.

However, according to recent communications and IT development, a growing trend is spreading from a traditional push-printing type printing method to a pull-printing type printing method. The pull-printing type printing method refers not to a method with which a user produces printing data in a PC and then transmits the printing data directly to an image forming apparatus, but to a method with which a user directs a location of printing data to the image forming apparatus, and then the image forming apparatus pulls the printing data from an external printing data source and prints the pulled printing data.

### SUMMARY

Additional aspects and/or advantages will be set forth in part in the description which follows and, in part, will be apparent from the description, or may be learned by practice of the invention.

The general inventive concept provides a printing method using a pull printing technique and an image forming apparatus using the same, which prints only remaining printing data that has not been stored in the image forming apparatus but has been received from a server upon receipt of a request for a print job, when only a portion of the printing data necessary for the print job requested by a user is stored in the image forming apparatus.

The inventive concept is not limited to the above aspects of the inventive concept, and additional aspects will be set forth in part in the description which follows and, in part, will be apparent from the description, or may be learned by practice of the presented embodiments.

According to the present invention there is provided an apparatus and method as set forth in the appended claims. Other features of the invention will be apparent from the dependent claims, and the description which follows.

According to an aspect of the general inventive concept, there is provided a method of printing data by using a pull printing technique in an image forming apparatus capable of communicating with a server storing the printing data to be printed, the printing method including: receiving information about the printing data necessary for a print job requested by a user from the server; determining whether or not the printing data necessary for the print job is stored in a storage of the image forming apparatus based on the received information; requesting the server to transmit printing data that has not been stored in the storage for the storage of the image forming apparatus when it is determined that only a portion of the printing data necessary for the print job has been stored; storing in the storage the printing data received from the server according to the transmission request; and performing the print job requested by the user.

According to another aspect of the general inventive concept, there is provided a computer-readable recording medium that is recorded with a program for executing a printing method in a computer.

According to another aspect of the general inventive concept, there is provided an image forming apparatus which prints printing data by using a pull printing technique by communicating with a server where printing data is stored, the image forming apparatus including a storage storing the printing data received from the server; an image forming unit performing a print job by using the printing data stored in the storage; a communication interface receiving information about the printing data necessary for the print job requested by a user from the server; and a control unit determining whether or not the printing data necessary for the print job is stored in the storage based on the received information, wherein the control unit controls to request the server to transmit the printing data that has not been stored in the storage when it is determined that only a portion of the printing data necessary for the print job has been stored, to store the received printing data in the storage according to the transmission request, and to perform the print job requested by the user.

### BRIEF DESCRIPTION OF THE DRAWINGS

The above and other features and advantages of the present general inventive concept will become more apparent by describing in detail exemplary embodiments thereof with reference to the attached drawings in which:
FIG. 1 is a schematic diagram of an image forming apparatus connected to a server and a user terminal according to an embodiment of the present inventive concept;
FIG. 2 is an illustrative flowchart showing a relationship between a user terminal, a server, and an image forming apparatus when printing is performed using a pull printing technique according to an embodiment of the present inventive concept;
FIG. 3 is a block diagram illustrating a structure of an image forming apparatus according to an embodiment of the present inventive concept;
FIG. 4 is a flowchart illustrating a printing method using a pull printing technique according to an embodiment of the present inventive concept;
FIG. 5 is a detailed flowchart of a new receiving mode illustrated in FIG. 4.
FIG. 6 is a detailed flowchart of a continuous receiving mode illustrated in FIG. 4.
FIG. 7 is a detailed flowchart of a version check mode illustrated in FIG. 4.
FIG. 8 is a detailed flowchart of a print suspension managing mode illustrated in FIG. 4.

### DETAILED DESCRIPTION

The present general inventive concept will now be described more fully with reference to the accompanying drawings, in which exemplary embodiments of the present general inventive concept are shown. Expressions such as "at least one of," when preceding a list of elements, modify the entire list of elements and do not modify the individual elements of the list. It will be understood by those skilled in the art that various changes in form and details may be made therein without departing from the spirit and scope of the invention as defined by the appended claims.

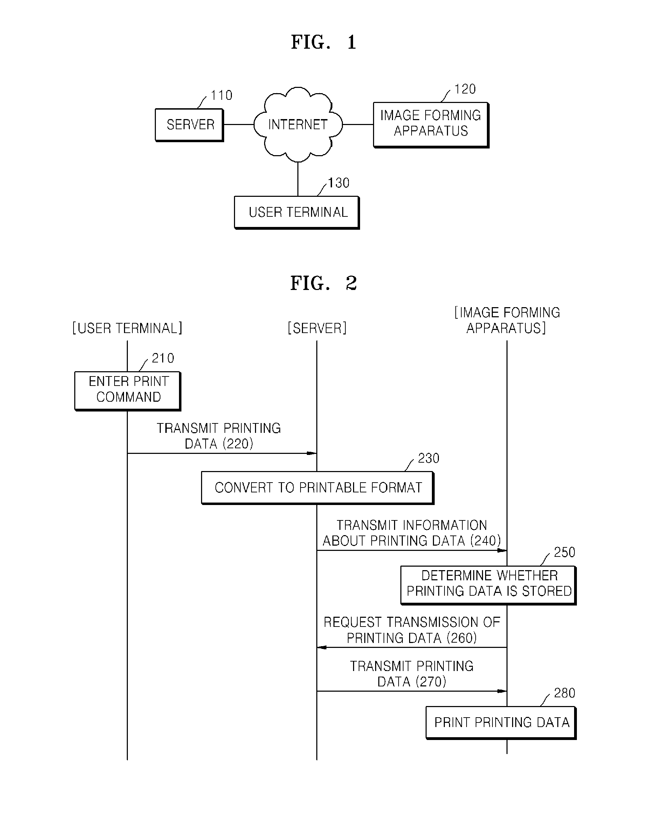

FIG. 1 is a schematic diagram of an image forming apparatus 120 connected to a server 110 and a user terminal 130, according to an embodiment of the present inventive concept. A pull-printing technique of the present inventive concept uses a cloud computing environment, and thus, as shown in FIG. 1, the server 110, the image forming apparatus 120, and the user terminal 130 may be connected to one another via the Internet over a wired or wireless network.

The server 110 mediates communication between the image forming apparatus 120 and the user terminal 130 under a pull-printing type printing environment. The server 110 may store printing data and may communicate with the image forming apparatus 120 and the user terminal 130. The server 110 may be connected to at least one image forming apparatus 120 and may be connected to at least one user terminal 130. That is, many users may access the one server 110 and request printing. In addition, the printing data stored in the server 110 may be transmitted to at least one image forming apparatus 120 and be printed.

The user terminal 130 may include a device a user uses to request a print job. Fore example, the user terminal may include a personal computer (PC) such as a laptop or desktop computer, a mobile device such as a smart phone, a personal digital assistant, or the like. A user requests a print job by using the user terminal 130. Unlike a push-printing type printing method where the user terminal 130 directly requests a print job to the image forming apparatus 120 and delivers printing data necessary for the print job and information related to the print job to the image forming apparatus 120, the user terminal 130 according to a pull-printing type printing method according to the present invention requests a print job via the server 110 and requests the server 110 to deliver printing data necessary for the print job and information related to the print job to the image forming apparatus 120. Here, the information related to the print job may include, for example, printing option information such as the number of printing pages, the size of the printing paper, or the like.

The image forming apparatus 120 receives the printing data necessary for the print job and the information related to the print job from the server 110 to then perform the print job requested by a user. The image forming apparatus may include a device which performs the print job requested by a user, such as a printer, a multifunctional printer, a fax machine, or the like.

FIG. 2 is an illustrative flowchart view showing a relationship between the user terminal 130, the server 110, and the image forming apparatus 120 when printing is performed using a pull printing technique according to an embodiment of the present inventive concept. The illustrative flowchart view describes a process in which a user uses the user terminal 130 which communicates with the server 110, and the server and image forming apparatus communicate with one another to enable the image forming apparatus 120 perform the print job.

In operation 210, a user enters a print command by using the user terminal 130. For example, when a user wants to print a content displayed on a screen of the user terminal 130, he or she selects a printing option from a menu and enters the print command. Accordingly, the user terminal 130 prepares to transmit printing data necessary for a print job and information related to the print job requested by the user.

In operation 220, the user terminal 130 transmits the printing data necessary for the print job and the information related to the print job requested by the user to the server 110. The server 110 may receive the printing data necessary for the print job and the information related to the print job from one or more user terminals 130.

In operation 230, the server 110 converts the printing data received from the user terminal 130 into a printable format. For example, the format may be portable document format (PDF).

In operation 240, the server 110 transmits information about the printing data to the image forming apparatus 120. The information about the printing data may include, for example, identification information for identifying the printing data necessary for the print job requested by the user, entire size information of the printing data, access authorization information for allowing access to the server 110 to receive the printing data, or the like. Here, the identification information for identifying the printing data may include information about a location where the printing data is stored, for example, a uniform resource locator (URL) address. Information related to the print job may also be transmitted. However, the printing data necessary for the print job may not be transmitted. In other words, printing data necessary for the print job may be excluded from the information about the printing data. That is, in operation 240, only the information about the printing data is first transmitted to the image forming apparatus 120 before the printing data necessary for the print job requested by the user is transmitted to the image forming apparatus 120, which may occur instead at operation 270, as described below. Therefore, by transmitting to the image forming apparatus 120 a minimum amount of information necessary for determining whether or not transmitting all the printing data to the image forming apparatus 120 is necessary, unnecessary printing data transmission may be avoided, and the time for the printing data transmission may be reduced. For transmitting the information about the printing data in operation 240, a protocol such as extensible messaging and presence protocol (XMPP) may be used.

In an alternative embodiment, when a user requests a print job by using the user terminal 130, in addition to the user terminal 130 requesting a print job via the server 110 and requesting the server 110 to deliver printing data necessary for the print job and information related to the print job to the image forming apparatus 120, the user terminal 130 may further direct the image forming apparatus 120 to communicate with the server 110 by providing the image forming apparatus 120 with information about a location where the printing data is stored, for example, a uniform resource locator (URL) address corresponding to a location and/or address of the server 110. Here, upon the image forming apparatus 120 communicating with the server 110, the server may transmit information about the printing data to the image forming apparatus 120, as described above with respect to operation 240.

In operation 250, the image forming apparatus 120 determines whether or not the printing data necessary for the print job requested by the user is stored in the image forming apparatus 120 by using the information about the printing data received from the server 110 in operation 240. That is, the image forming apparatus 120 determines whether or not a print job about the same printing data was requested by the user previously and whether or not all the printing data related to the print job is stored in the image forming apparatus 120. Whether or not a print job about the same printing data was previously requested by the user may be confirmed by using the identification information for identifying the printing data, and whether or not all the printing data related to the print job is stored in the image forming apparatus 120 may be confirmed by using the entire size information of the printing data. If the image forming apparatus 120 stores all the necessary printing data due to the request about the same print job previously made, the printing job requested by the user may be performed by loading and using the stored printing data without receiving the printing data from the server 110.

When it is determined that the printing data necessary to perform the print job requested by the user is not stored in the image forming apparatus 120 in operation 250, the image forming apparatus 120 requests the server 110 to transmit the necessary printing data in operation 260. For example, when a portion of the printing data necessary to perform the print job requested by the user is stored in the image forming apparatus 120, the image forming apparatus 120 may request the server 110 to transmit the remaining printing data except the stored printing data. In addition, if the image forming apparatus 120 has not been previously requested to perform the print job requested by the user, the image forming apparatus 120 may request the server 110 to transmit all the printing data.

In operation 270, the server 110 transmits the printing data requested by the image forming apparatus 120 to the image forming apparatus 120. Here, the information related to the print job may be also transmitted to the image forming apparatus 120.

In operation 280, the image forming apparatus 120 performs the print job requested by the user.

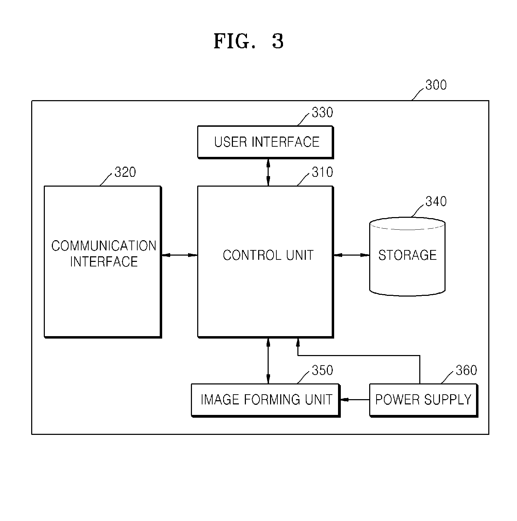

FIG. 3 is a block diagram illustrating a structure of an image forming apparatus 300 according to an embodiment of the present inventive concept. Referring to FIG. 3, the image forming apparatus 300 may include a control unit 310, a communication interface 320, a user interface 330, a storage 340, an image forming unit 350, and a power supply unit 360. However, it would be understood by those skilled in the art that other general-purpose components besides the components described in FIG. 3 may be further included in the present embodiment. For example, a scan unit for a scan function, a fax unit for a fax function, or the like may be further included.

The control unit 310 controls overall functions of the image forming apparatus 300 and may include a processor controlling the overall functions of the image forming apparatus 300. The processor may be divided into a plurality of sub-processors separated according to each of their functions and a main processor managing the plurality of sub-processors. The control unit 310 may receive data from an external device via the communication interface 320 or may request the external device to transmit data via the communication interface 320. In addition, the control unit 310 may receive information entered by a user via the user interface 330. Moreover, the control unit 310 controls the storage 340 to store the data therein or to load the data therefrom. The control unit 310 may compare the data loaded from the storage 340 and the data received from the external device. The control unit may deliver or transmit the printing data stored in the storage 340 to the image forming unit 350. The control unit 310 may be operable by the voltage output from the power supply unit 360, and the voltage may be a direct-current voltage of 3.3 V or 5 V but is not limited thereto.

The communication interface 320 according to the present embodiment may include all of a network module for a connection with a network, a modem for transmitting/receiving fax data, a USB host module for forming a data mobile channel with a portable storage medium, and the like, according to a function of the image forming apparatus 300. Here, the external device may include a device connected with the image forming apparatus 300 via a wired or wireless network, and may include, for example, a server, a PC such as a laptop or desktop computer, a mobile device such as a smart phone, a personal digital assistant, a fax machine, or the like.

The user interface 330 receives an input signal from a user and displays information to the user. For example, the user interface 330 may include all input and output devices such as a display panel, a mouse, a keyboard, a touch screen, a monitor, a speaker, and the like, which are provided in the image forming apparatus 300.

The storage 340 may store all data generated by an operation of the image forming apparatus 300 or used in the image forming apparatus 300. For example, the storage 340 may store the printing data received from the external device, information about the printing data, information about version of the printing data, or the like and may store controlling data used in controlling the operation of the image forming apparatus 300 and data generated by the operation of the image forming apparatus 300, for example, scanning data. The storage 340 may include a device which stores data, and may include, for example, computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, non-volatile memory cards, and the like.

The image forming unit 350 forms an image and performs a print job for printing the printing data on printing paper or other printable medium. When the printing data received from the external device is not in a printable format, the image forming unit 350 may convert the printing data into a format to be printable. The image forming unit 350 according to the present embodiment may include all hardware units which perform charging, exposing, developing, transferring and fusing to perform the print job and software modules to drive the hardware units. The image forming unit 350 is operable by the voltage output from the power supply unit 360, and the voltage may be a direct-current voltage of 12 V or 24 V but is not limited thereto.

The power supply unit 360 refers to a device that converts an alternating-current voltage supplied by an external power source into an appropriate direct-current voltage that is used for electronics by using an electric voltage transformer. A switching mode power supply (SMPS) is mostly used since the image forming apparatus 300 requires a power supply which has a simple structure and a small size, as well as which enables stable power supply. However, other types of power supplies may be used, such as a high voltage power supply (HVPS), for example.

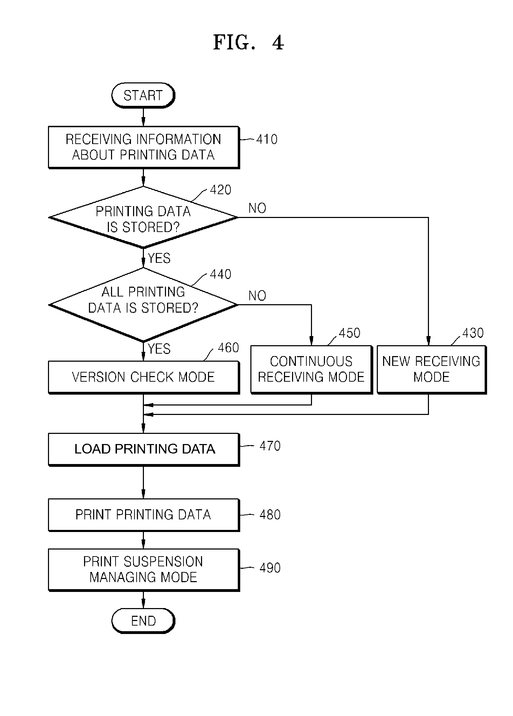

FIG. 4 is a flowchart illustrating a printing method using a pull printing technique according to an embodiment of the present inventive concept. The FIG. 4 flowchart illustrates operation of the image forming apparatus 300 to perform a print job requested by a user and illustrates parts corresponding to operations 240 through 280 of FIG. 2 in more detail.

In operation 410, the communication interface 320 of the image forming apparatus 300 receives information about the printing data necessary for the print job requested by the user from the server 110. The information about the printing data may include identification information for identifying the printing data necessary for the print job requested by the user, entire size information of the printing data, or the like. In addition, information related to the print job such as printing option information or information about version of the printing data may be received, and such information may be separately received later. The communication interface 320 communicates with the control unit 310 to deliver the received information to the control unit 310.

In operation 420, the control unit 310 determines whether or not the printing data necessary to perform the print job requested by the user is stored in the storage 340 of the image forming apparatus 300 by using the received information about the printing data in order to determine whether or not the print job requested by the user is the same as a print job that has been previously requested. For example, when the received information about the printing data includes the identification information to identify the printing data, the control unit 310 determines whether or not the received identification information matches identification information about which printing data among a plurality of printing data stored in the storage 340 of the image forming apparatus 300. The identification information to identify the printing data may be location information where the printing data necessary for the print job requested by the user is stored. For example, the identification information may be a URL address where the printing data is stored or a storing location in the server 110 where the printing data converted into a printable format is stored.

When it is determined that the printing data necessary for the print job requested by the user is not stored in the storage 340, the procedure may proceed to operation 430, and when it is determined that the printing data is stored in the storage 340, the procedure may proceed to operation 440.

In operation 430, the control unit 310 performs a new receiving mode to receive the printing data necessary for the print job requested by the user.

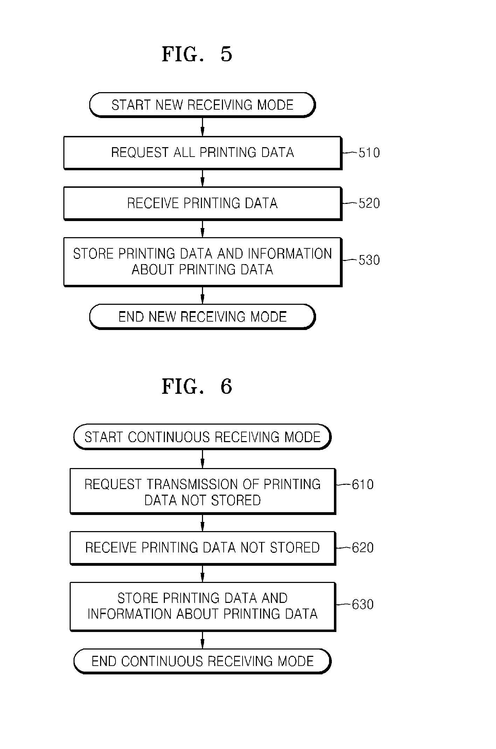

FIG. 5 is a detailed flowchart of the new receiving mode corresponding to operation 430 illustrated in FIG. 4.

In operation 510, the control unit 310 controls the communication interface 320 to request the server 110 to transmit all the printing data necessary for the print job requested by the user.

In operation 520, the communication interface 320 receives all the printing data necessary for the print job requested by the user from the server 110 in response to the transmission request. A standard protocol such as hyper text transfer protocol (HTTP) or file transfer protocol (FTP) may be used.

In operation 530, the control unit 310 controls all the received printing data to be stored in the storage 340 and controls information about the printing data, which may include identification information, entire size information, and the like, to be also stored therein. Moreover, the control unit 310 may set storage completion information which indicates that all the printing data transmitted from the server 110 has been stored in the storage 340, to have a valid value and may store the storage completion information in the storage 340.

Referring back to FIG. 4, in operation 440, the control unit 310 determines whether or not all the printing data necessary for the print job requested by the user is stored in the storage 340 of the image forming apparatus 300. This is because all the printing data necessary for the print job may not have been stored in the storage 340 although the same print job was previously requested by the user. For example, when a communication connection between the server 110 and the image forming apparatus 300 is disconnected or when the user enters a command canceling the print job during the print job operation, only a portion of the printing data may be stored in the storage 340 of the image forming apparatus 300.

Determination of whether or not all the printing data necessary for the print job requested by the user is stored in the storage 340 may be performed in many different ways. For example, the determination may be performed by determining whether or not an entire size of the printing data necessary for the print job requested by the user is the same as a size of the printing data specified by the identification information about the printing data among the printing data stored in the storage 340. For this, the information about the printing data delivered to the control unit 310 in operation 410 may include the entire size information of the printing data necessary for the print job requested by the user. In addition, as another example, when all the printing data necessary for the print job is stored in the storage 340, the determination may be performed by using the storage completion information indicating that all the printing data has been stored. The storage completion information has a valid value indicating storage completion of all the printing data when all the printing data transmitted from the server 110 has been stored in the storage 340. Otherwise, when all the printing data transmitted from the server 110 has not been stored in the storage 340, the storage completion information has an invalid value such as NULL. Therefore, according to whether or not the storage completion information has a valid value, it is determined whether or not all the printing data necessary for the print job requested by the user has been stored in the storage 340.

When it is determined that all the printing data necessary for the print job requested by the user has not been stored in the storage 340, the procedure may proceed to operation 450. Otherwise, when it is determined that all the printing data has been stored in the storage 340, the procedure may proceed to operation 460.

In operation 450, the control unit 310 performs a continuous receiving mode to receive the printing data which has not been stored in the storage 340 among the printing data necessary for the print job requested by the user.

FIG. 6 is a detailed flowchart of the continuous receiving mode corresponding to operation 450 in FIG. 4.

In operation 610, the control unit 310 controls the communication interface 320 to request the server 110 to transmit the printing data which has not been stored in the storage 340 among the printing data necessary for the print job requested by the user. For example, by transmitting the identification information of the printing data requesting transmission, a start portion of the printing data for requesting transmission and a size of the printing data requesting transmission to the server 110, a portion of the printing data that has not been stored in the storage 340 may be requested to the server 110 for its transmission. Accordingly, unnecessary transmission of data may be blocked, and the time for printing data transmission may be reduced.

In operation 620, the communication interface 320 receives the printing data that has not been stored in the storage 340 of the image forming apparatus 300 from the server 110 in response to the transmission request. A standard protocol such as HTTP or FTP may be used.

In operation 630, the control unit 310 controls the received printing data to be stored in the storage 340 and controls information about the printing data, for example, the modified entire size information and the like to be also stored. Moreover, since all the printing data necessary for the print job is stored in the storage 340 by receiving the printing data not stored in the storage 340 from the server 110, the control unit 310 may set storage completion information, which indicates that all the printing data transmitted from the server 110 has been stored in the storage 340, to have a valid value and may store the storage completion information in the storage 340.

Referring back to FIG. 4, in operation 460, the control unit 310 checks a version of the printing data when it is determined that all the printing data necessary for the print job requested by the user has been stored in the storage 340. This is because although requested print jobs are the same, a modification may occur between a request of the previous print job and a request of the current print job. Especially, when pull printing is performed under a cloud computing environment using an Internet network, since many users may access the server 110 for printing and may change contents, there is high possibility to changed a content of the printing data. For this, a version check mode is performed to confirm information about the version of the printing data.

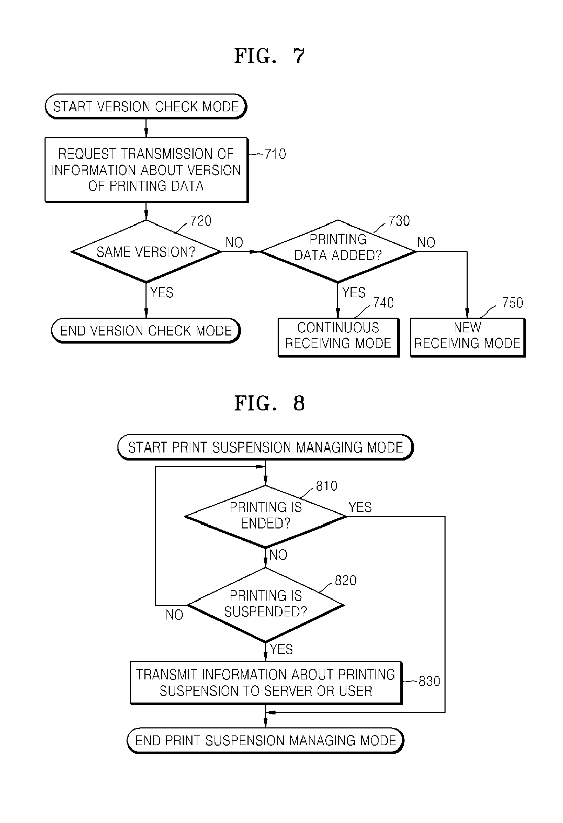

FIG. 7 is a detailed flowchart of the version check mode corresponding to operation 460 illustrated in FIG. 4.

In operation 710, the control unit 310 controls the communication interface 320 to request transmission of the information about the version of the printing data necessary for the print job requested by the user. The communication interface 320 requests the server 110 to send the information about the version of the printing data. The communication interface 320 receives the information about the version of the printing data from the server 110 according to the transmission request and delivers the information to the control unit 310. If the communication interface 320 received the information about the printing data and the information about the version of the printing data at the same time in operation 410, operation 710 may be omitted.

In operation 720, the control unit 310 compares the version of the printing data stored in the storage 340 with the version of the printing data stored in the server 110 by using the information about the version of the printing data received from the server 110. To compare the two versions, many different methods may be used, and a form of the information about the version of the printing data may be different according to the method.

For example, whether or not the version is modified may be confirmed by version identification information which represents a version of the printing data. That is, the version identification information representing the version of the printing data stored in the storage 340 and the version identification information representing the version of the printing data stored in the server 110 may be compared to determine whether or not they are same. Here, the information about the version of the printing data received from the server 110 is the version identification information. For another method, last modified time information of the printing data necessary for the print job requested by the user may be compared. The image forming apparatus 300 receives the last modified time of the printing data when the image forming apparatus 300 receives the printing data from the server 110 and stores the last modified time of the printing data along with the printing data in the storage 340. When the image forming apparatus 300 receives print requests about the printing data with the same identification information, the image forming apparatus 300 compares the last modified time of the printing data stored in the image forming apparatus 300 with that of the printing data stored in the server 110. If the last modified time of the printing data stored in the server 110 is different from that of the printing data stored in the image forming apparatus 300, the version of the printing data may be considered as having been modified. Here, the information about the version of the printing data is the last modified time of the printing data.

As a result of the version comparison, if the version of the printing data stored in the storage 340 and that of the printing data stored in the server 110 are the same, the version check mode is ended. However, if the version of the printing data stored in the storage 340 and that of the printing data stored in the server 110 differ, the procedure may proceed to operation 730.

In operation 730, the control unit 310 determines what differences exist between the printing data stored in the storage 340 and the printing data stored in the server 110. The control unit 310 determines whether or not the printing data stored in the server 110 mainly uses the printing data stored in the storage 340 and a part of the content is added. Here, if the part of the content of the printing data stored in the storage 340 is simply added to the printing data stored in the server 110 without modification, the printing data stored in the storage 340 may be used, and thus, only the added printing data needs to be transmitted.

If the printing data is added, then the procedure may proceed to a continuous receiving mode of operation 740, and if any modification is made other than the additional printing data content, then the procedure may proceed to a new receiving mode of operation 750.

In operation 740, the continuous receiving mode is performed, which may proceed similarly as the continuous receiving mode illustrated in FIG. 6. For this, the server 110 has to discriminatively store the added content of the printing data. That is, the control unit 310 controls the communication interface 320 to request transmission of the printing data corresponding to the added part that has not been stored in the storage 340 to the server 110. According to the transmission request of the communication interface 320, the image forming apparatus 300 receives the printing data corresponding to the added part that has not been stored in the storage 340 from the server 110 via the communication interface 320. The control unit 310 controls the received printing data to be stored in the storage 340 and controls the entire size information modified due to storing of the added printing data to be also stored.

In operation 750, the new receiving mode may proceed similarly as the new receiving mode illustrated in FIG. 5. That is, the control unit 310 controls the communication interface 320 to request transmission of all the printing data necessary for the print job requested by the user to the server 110, and the communication interface 320 receives all the printing data necessary for the print job requested by the user from the server 110 in response to the transmission request. The control unit 310 controls all the received printing data to be stored in the storage 340 and controls information about the printing data, which may include identification information, entire size information and the like to be also stored.

Referring back to FIG. 4, in operation 470, the control unit 310 loads the printing data stored in the storage 340 and delivers the loaded printing data to the image forming unit 350. In the case of the new receiving mode corresponding to operation 430 of FIG. 4 and the continuous receiving mode corresponding to operation 450 of FIG. 4, the printing data received from the server 110 may be loaded in sequence and delivered to the image forming unit 350 immediately after being stored in the storage 340, or the printing data may be delivered to the image forming unit 350 after the printing data is completely stored in the storage 340 according to reception of the printing data.

In operation 480, the image forming unit 350 performs the print job by using the delivered printing data. The image forming unit 350 performs printing based on the information related to the print job such as the number of printing pages, the size of the printing paper, and the like by using the printing data in a printable format such as PDF, and a protocol such as XMPP. In the continuous receiving mode corresponding to operation 450 of FIG. 4, requesting transmission of the printing data that has not been stored in the storage 340 to the server 110 and printing the printing data stored in the storage 340 may be performed at the same time.

In operation 490, the control unit 310 monitors if the print job is suspended in the image forming unit 350 and performs a print suspension managing mode by taking an appropriate action according to whether the printing is suspended.

FIG. 8 is a detailed flowchart of the print suspension managing mode corresponding to operation 490 illustrated in FIG. 4.

When the printing is performed by the image forming unit 350, the control unit 310 in operations 810 and 820 detects whether or not printing is suspended until the print job is normally ended. If the print job is normally ended, the print suspension managing mode is also ended. However, if printing is suspended before a normal end, the procedure may proceed to operation 830.

In operation 830, the control unit 310 takes an action corresponding to a print suspension when the print suspension is detected. For example, when a communication connection is disconnected between the server 110 and the image forming apparatus 300 while receiving the printing data from the server 110 according to the new receiving mode of operation 430 in FIG. 4 or the continuous receiving mode of operation 450 in FIG. 4, the control unit 310 may request re-transmission of the remaining printing data after disconnection of the communication connection to the server 110. Also, the control unit 310 may inform the user that the print job is abnormally ended by using a protocol such as XMPP. In such a case, information about the suspended print job such as up to what part printing is completed among all the printing data or whether or not to re-request the print job, may be transmitted to a user terminal 130.

When a portion of printing data necessary for a print job requested by a user is stored in an image forming apparatus, and if a request is made later about the same print job, by requesting transmission of only the remaining printing data not stored in the image forming apparatus to the image forming apparatus, the time delay or storage space shortage caused by transmitting all printing data to the image forming apparatus may be avoided.

Thus, a method of printing data by using a pull printing technique and the image forming apparatus using the same according to the above-disclosed embodiments may perform a print job by determining whether printing data transmitted from a user terminal to a server is previously stored in a storage of the image forming apparatus. The image forming apparatus first receives from the server information about the printing data necessary for the print job from the server, and not the printing data necessary for the print job itself. The image forming apparatus uses the information about the printing data to determine whether the printing data necessary for the print job is stored in the storage of the image forming apparatus. If all of the printing data necessary for the print job is stored in the storage, and corresponds to printing data necessary for the print job stored in the server, then the image forming apparatus may compare the versions of the printing data to ensure the printing data has not been modified since a last request for a previous print job. If only a portion of the printing data necessary for the print job stored in the storage corresponds to printing data necessary for the print job stored in the server, then the image forming apparatus may receive the remaining printing data from the server. If the printing data necessary for the print job is not stored in the storage, then the image forming apparatus may request that the server transmit the printing data necessary for the print job.

The method of printing data by using a pull printing technique and the image forming apparatus using the same according to the above-described example embodiments may use one or more processors, which may include a microprocessor, central processing unit (CPU), digital signal processor (DSP), or application-specific integrated circuit (ASIC), as well as portions or combinations of these and other processing devices.

The terms "module", and "unit," as used herein, may refer to, but is not limited to, a software or hardware component, circuit, or device, such as a Field Programmable Gate Array (FPGA) or Application Specific Integrated Circuit (ASIC), which performs certain tasks. A module or unit may be configured to reside on an addressable storage medium and configured to execute on one or more processors. Thus, a module or unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules/units may be combined into fewer components and modules/units or further separated into additional components and modules.

The method of printing data by using a pull printing technique according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Each block of the flowchart illustrations may represent a unit, module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

While the present general inventive concept has been particularly shown and described with reference to exemplary embodiments disclosed herein, it will be understood by those of ordinary skill in the art that various changes in form and details may be made therein without departing from the scope of the present general inventive concept as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of printing data by using a pull printing technique, the printing method comprising:
receiving information about printing data necessary for a print job requested by a user from a server storing the printing data to be printed;
determining whether the printing data necessary for the print job is stored in a storage of the image forming apparatus based on the received information;
requesting the server to transmit printing data that has not been stored in the storage when it is determined that only a portion of the printing data necessary for the print job has been stored;
storing in the storage the printing data received from the server according to the transmission request; and
performing the print job.

2. The printing method of claim 1, wherein the received information comprises entire size information of the printing data necessary for the print job, and the determining whether the printing data necessary for the print job is stored in a storage comprises determining whether a size of the printing data necessary for the print job stored in the storage is the same as an entire size represented by the received entire size information.

3. The printing method of claim 1, wherein the received information comprises identification information about the printing data necessary for the print job, and the determining whether the printing data necessary for the print job is stored in a storage comprises determining whether identification information about printing data stored in the storage is the same as the received identification information.

4. The printing method of claim 3, wherein the identification information includes uniform resource locator (URL) information which indicates a location where the printing data necessary for the print job is stored.

5. The printing method of claim 1, wherein the determining whether the printing data necessary for the print job is stored in a storage comprises:
determining whether the printing data necessary for the print job is stored in the storage by using identification information about the printing data necessary for the print job included in the received information; and
determining whether all printing data necessary for the print job is stored in the storage by using entire size information of the printing data necessary for the print job included in the received information.

6. The printing method of claim 1, wherein the determining whether the printing data necessary for the print job is stored in a storage comprises:
determining whether the printing data necessary for the print job is stored in the storage by using identification information about the printing data necessary for the print job included in the received information; and
determining whether all the printing data necessary for the print job is stored in the storage based on storage completion information indicating whether all printing data necessary for the print job transmitted from the server is stored in the storage.

7. The printing method of claim 1, wherein when it is determined that all the printing data necessary for the print job has been stored in the storage, the method further comprises:
loading the printing data necessary for the print job from the storage; and
printing the loaded printing data.

8. The printing method of claim 1, wherein when it is determined that all the printing data necessary for the print job has been stored in the storage, the method further comprises:
comparing a version of the printing data necessary for the print job stored in the server with a version of the printing data necessary for the print job stored in the storage; and
requesting the server to transmit the printing data necessary for the print job stored in the server for the storage when the versions differ as a result of the comparison.

9. The printing method of claim 8, wherein the comparing comprises:
requesting the server to transmit information about the version of the printing data necessary for the print job stored in the server; and
comparing whether the version of the printing data necessary for the print job stored in the server is the same as the version of the printing data necessary for the print job stored in the storage by using the information about the version of the printing data necessary for the print job stored in the server and received according to the transmission request for information about the version of the printing data necessary for the print job stored in the server.

10. The printing method of claim 8, wherein the requesting the server to transmit the printing data necessary for the print job stored in the server for the storage when the versions differ as a result of the comparison comprises:
determining whether all the printing data necessary for the print job stored in the storage corresponds to a portion of the printing data necessary for the print job stored in the server; and
requesting the server to transmit printing data corresponding to an additional portion of the printing data when it is determined that all the printing data necessary for the print job stored in the storage corresponds to a portion of the printing data necessary for the print job stored in the server.

11. The printing method of claim 10, further comprising requesting the server to transmit all the printing data necessary for the print job stored in the server when it is determined that all the printing data necessary for the print job stored in the storage does not correspond to a portion of the printing data necessary for the print job stored in the server.

12. The printing method of claim 1, further comprising requesting the server to transmit remaining printing data necessary for the print job stored in the server when a previous transmission is suspended due to a suspension of communication with the server.

13. The printing method of claim 1, further comprising transmitting information about the print job to the user when the print job requested by the user has been suspended.

14. A non-transitory computer-readable recording medium that is recorded with a program for executing the printing method of claims 1 through 13 in a computer.

15. An image forming apparatus which prints printing data by using a pull printing technique by communicating with a server where printing data for a print job is stored, the image forming apparatus comprising:
a storage to store the printing data received from the server;
a communication interface to receive information about the printing data necessary for the print job from the server; and
a control unit to determine whether the printing data necessary for the print job is stored in the storage based on the received information, wherein the control unit controls to request the server to transmit printing data that has not been stored in the storage when it is determined that only a portion of the printing data necessary for the print job has been stored, controls to store the received printing data in the storage according to the transmission request, and controls to perform the print job.
